# EUROPEAN PATENT APPLICATION

(11) **EP 4 722 596 A1**
(43) Date of publication of application: **08.04.2026**
(21) Application number: 25201408.9
(22) Date of filing: 10.09.2025
(51) Int. Cl.: F23R 3/28

(54) **GAS TURBINE ENGINE AND FUEL INJECTOR ASSEMBLY THEREFOR**

(30) Priority: 02.10.2024 US 202418904248
(71) Applicant: General Electric Company, Cincinnati, Ohio 45215 (US)
(72) Inventor: SHEALY, James, West Chester, 45069 (US); VENTURATO, Marco, West Chester, 45069 (US); KNOLLE, Bernard Gustav, Evendale, 45215 (US); ROYER, Brian, West Chester, 45069 (US)
(74) Representative: Openshaw & Co.

(57) **Abstract**

A gas turbine engine (10), comprising a compressor section (12), combustion section (14), and turbine section (16) in serial flow arrangement, with the combustion section (14) comprising: a combustor liner (40) at least partially defining a combustion chamber (50); and a fuel injector assembly (48, 100, 200) comprising a mixing tube (38, 110, 210) having a mixing tube body (112, 212) defining a mixing channel (114, 214). The mixing tube body (112, 212) can have a set of fuel passages (132, 232) terminating in fuel orifices (136, 236) fluidly coupled to the mixing channel (114, 214). A set air flow passages (142, 242) terminating in air outlets (144, 244) can be fluidly coupled to the mixing channel (114, 214). At least some of the air outlets (144, 244) circumscribe a corresponding fuel orifice (136, 236).

## Description

### TECHNICAL FIELD

The present subject matter relates generally to a fuel injector for supplying a mixture of fuel and air to a turbine engine, and more specifically, for supplying the mixture of fuel and air to a combustor for combustion to drive the turbine engine.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, hydrocarbon fuels are used in the combustor of a turbine engine. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

To reduce the environmentally unwanted byproducts, other fuels, such as hydrogen, are being explored. Hydrogen or hydrogen mixed with another element has a higher flame temperature than traditional hydrocarbon fuels. That is, hydrogen or a hydrogen mixed fuel typically has a wider flammable range and a faster burning velocity than traditional hydrocarbon-based fuels.

### BRIEF DESCRIPTION OF THE DRAWINGS

In the drawings:
FIG. 1 is a schematic representation of a turbine engine, the turbine engine including a compression section, a combustion section, and a turbine section, in accordance with an aspect of the present disclosure.
FIG. 2 depicts a cross-sectional view of the combustion section taken along line II-II of FIG. 1, further illustrating a fuel injector assembly coupled to a combustion chamber, in accordance with an aspect of the present disclosure.
FIG. 3 is a cross-sectional view of a fuel injector assembly suitable for use within the set of fuel injector assemblies of FIG. 2.
FIG. 4A is a schematic view illustrating a fuel passage and an air passage of a fuel injector assembly in accordance with various aspects described herein.
FIG. 4B is a schematic view illustrating a fuel passage and an air passage of a fuel injector assembly in accordance with various aspects described herein.
FIG. 4C is a schematic view illustrating a fuel passage and an air passage of a fuel injector assembly in accordance with various aspects described herein.
FIG. 4D is a schematic view illustrating a fuel passage and an air passage of a fuel injector assembly in accordance with various aspects described herein.
FIG. 4E is a schematic view illustrating a fuel passage and an air passage of a fuel injector assembly in accordance with various aspects described herein.
FIG. 5 is a cross-sectional view of an exemplary fuel injector assembly suitable for use within the set of fuel injector assemblies of FIG. 2.
FIG. 6A is a schematic view illustrating a fuel orifice, a first air outlet, and a second air outlet of a fuel injector assembly in accordance with various aspects described herein.
FIG. 6B is a schematic view illustrating a fuel orifice, a first air outlet, and a second air outlet of a fuel injector assembly in accordance with various aspects described herein.

### DETAILED DESCRIPTION

Aspects of the disclosure described herein are directed to a combustor and a fuel injector assembly for a combustor. With some aspects, the disclosed combustors and fuel injector assemblies can be utilized with fuel, which can include one or more of liquid or gaseous hydrogen, natural gas, diesel, and Jet-A, and can incorporate one or both of water and steam. With turbine engines, fuel can be stored, used, or both, at lower temperatures than air moving in the turbine engine, which can create thermal gradients that can cause high stress concentrations and thermal variability in portions of a fuel injector assembly. The presence of fuel and air at such differing temperatures in the fuel injector assembly (e.g., in a mixing tube body) can create thermal gradients between portions of the fuel injector assembly in thermal contact with the relatively hotter air and the relatively cooler fuel. These thermal gradients can cause portions of the fuel injector assembly (e.g., an inner surface of the mixing tube body) to experience increased thermal stress that can accelerate wear and degradation of fuel injector assemblies, including tube surfaces, can cause flow variations from tube to tube that diminish overall mixing capabilities, and reduce a lifespan of one or both of the injector and mixer.

With fuel injector assemblies disclosed herein, fuel from a fuel orifice can be introduced with air supplied from an air outlet circumscribing the fuel orifice and thus provide a thermal break between the fuel and other surfaces of the fuel injector assembly. Further, a fuel passage for supplying fuel through a body (e.g., mixing tube body) of the fuel injector assembly can be circumscribed by a corresponding air flow passage for supplying air to the air outlet. The air flow passage circumscribing a portion of the fuel passage (e.g. the portion of the fuel passage passing through the body of the fuel injector assembly) can further provide a thermal break between the fuel and other surfaces of the fuel injector assembly beyond the circumscribing air outlet.

These thermal breaks can reduce thermal gradients and lessen thermal stress concentrations to improve overall mixing capabilities and the lifespan of the fuel injector assembly.

For purposes of illustration, the present disclosure will be described with respect to a turbine engine (e.g., a gas turbine engine). It will be understood, however, that aspects of the disclosure described herein are not so limited. A combustor as described herein can be implemented in various engines, including but not limited to turbojet, turboprop, turboshaft, and turbofan engines. Aspects of the disclosure discussed herein can have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first" and "second" can be used interchangeably to distinguish one component from another and are not intended to signify location or importance of the individual components.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore or forward can mean upstream and aft or rearward can mean downstream.

The term "fluid" can be a gas, a liquid, or a combination thereof. The term "fluidly coupled" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, behind, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only the dimensions, positions, order, and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "generally", and "substantially", are not to be limited to the precise value specified. In at least some instances, the approximating language can correspond to the precision of an instrument for measuring the value, or the precision of the methods or machines for constructing or manufacturing the components. In at least some instances, the approximating language can correspond to the precision of an instrument for measuring the value, or the precision of the methods or machines for constructing or manufacturing the components and systems. For example, the approximating language can refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Additionally, as used herein, a "controller" can include a component configured or adapted to provide instruction, control, operation, or any form of communication for operable components to effect the operation thereof. A controller can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), proportional resonant controller (PR), a hardware-accelerated logic controller (e.g. for encoding, decoding, transcoding, etc.), the like, or a combination thereof. Non-limiting examples of a controller can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can be configured for comparing a first value with a second value, and operating and controlling operations of additional components based on the satisfying of that comparison. For example, when a sensed, measured, or provided value is compared with another value, including a stored or predetermined value, the satisfaction of that comparison can result in actions, functions, or operations controllable by the controller.

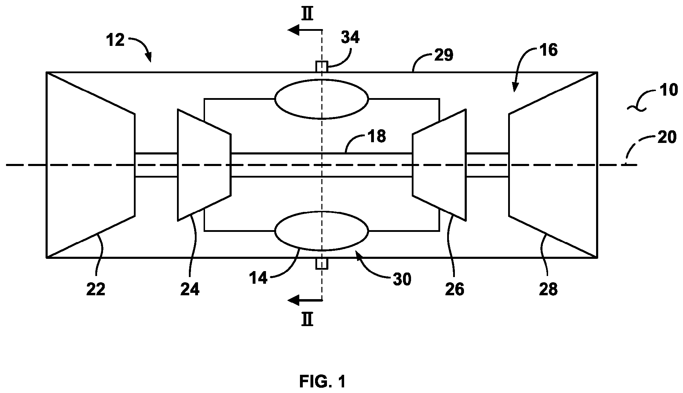

FIG. 1 is a schematic view of a turbine engine 10 (e.g., a gas turbine engine). As a non-limiting example, the turbine engine 10 can be used within an aircraft. The turbine engine 10 can include, at least, a compressor section 12, a combustion section 14, and a turbine section 16. A drive shaft 18 rotationally couples the compressor section 12 and turbine section 16, such that rotation of one affects the rotation of the other, and defines a rotational axis 20 for the turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about and enshroud one or more sections of the turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section 16 is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan and the LP compressor 22. The pressurized air flow and the combustion gases can together define a working air flow that flows through the fan, compressor section 12, combustion section 14, and turbine section 16 of the turbine engine 10.

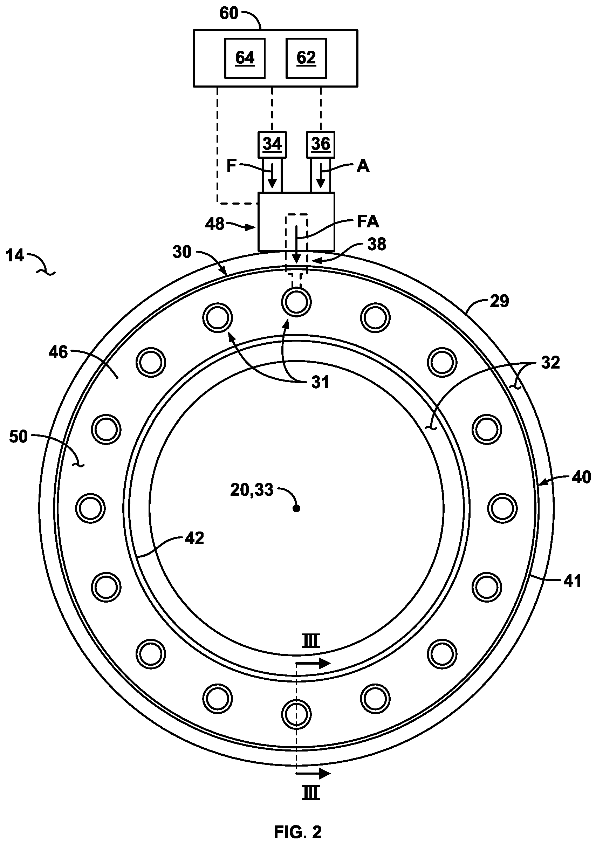

FIG. 2 depicts a cross-sectional view of the combustion section 14 along line II-II of FIG. 1. A centerline 33 of the combustion section 14 can be colinear with the rotational axis 20. The combustion section 14 can include a combustor 30 with an annular arrangement of combustor portions 31 disposed around the centerline 33 or rotational axis 20 of the turbine engine 10 (e.g., circumferentially spaced from each other in an annular configuration) (FIG. 1). The combustor portions 31 can, in some configurations, include or be configured as combustor cups, fuel cups, or injector cups. A fuel injector assembly 48 can be fluidly coupled to each combustor portion 31. The combustor 30 can have a can, can-annular, or annular arrangement depending on the type of engine in which the combustor 30 is located. In a non-limiting example, the combustor 30 can have a combination arrangement located with a shroud or casing 29 of the turbine engine 10 (FIG. 1). The shroud or casing 29 can enshroud or cover at least a portion of the combustion section 14.

The combustor 30 can be at least partially defined by a combustor liner 40. In some examples, the combustor liner 40 can include an outer liner 41 and an inner liner 42 concentric with respect to each other and arranged in an annular fashion about the centerline 33 or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

The combustor liner 40 can at least partially define a combustion chamber 50 arranged annularly about the rotational axis 20. For example, a wall 46 can be substantially perpendicular to the rotational axis 20 and can cooperate with the outer liner 41, the inner liner 42, or both, to at least partially define the combustion chamber 50. A compressed air passage 32 can be defined at least in part by both the combustor liner 40 and the casing 29.

The combustor 30 can include or be fluidly coupled to a fuel source 34 (e.g., a fuel manifold or conduit), an air source 36 (e.g., an air manifold or conduit), or both. The fuel source 34 can supply fuel (F) that can include any suitable liquid or gaseous fuel, including one or more of hydrogen, natural gas, diesel, or Jet-A, and can incorporate one or both of water and steam. The hydrogen fuel, in non-limiting examples, can include 100% H₂ (e.g., without a diluent). For example, the fuel injector assembly 48 can be a gaseous fuel injector assembly, such as a gaseous hydrogen fuel injector assembly, a liquid fuel injector assembly, or a fuel injector assembly configured to inject a combination of gas and liquid. The air source 36 can supply air (A), such as compressed air, to the fuel injector assembly 48. For example, the air source 36 can include or be fluidly coupled to the compressor section 12 (FIG. 1).

The fuel injector assembly 48 can be coupled to the wall 46. The fuel injector assembly 48 fluidly couples the fuel source 34 and the air source 36 with one of the combustor portions 31 and the combustion chamber 50. The combustor portions 31 can be separately connected to the wall 46. For example and without limitation, the combustor portions 31 can be connected to the wall 46 in a circumferentially spaced configuration. The combustor portions 31 can be disposed at a radial distance from the centerline 33 that is greater than a radial distance of the inner liner 42 and less than a radial distance of the outer liner 41.

The fuel injector assembly 48 can include a mixing tube 38 (e.g., a mixing tube body). For example, the mixing tube 38 can be a gaseous mixing tube, such as a gaseous hydrogen mixing tube, a liquid fuel mixing tube, or a mixing tube configured for mixing a combination of gaseous fuel and liquid fuel with air (A). Air (A) provided by the air source 36 can include the pressurized air that flows from the compressor section 12 to the combustor 30 (FIG. 1) during operation. The mixing tube 38 is fluidly coupled with combustor 30 such that fuel (F) and air (A) mix together, at least to some degree, to form a fuel-air mixture (FA) before flowing out of the fuel injector assembly 48 and into the combustion chamber 50.

A controller 60 can be connected to and at least partially control operation of the fuel source 34, the air source 36, the fuel injector assembly 48, or a combination thereof. The controller 60 can include a processor 62 and a memory 64.

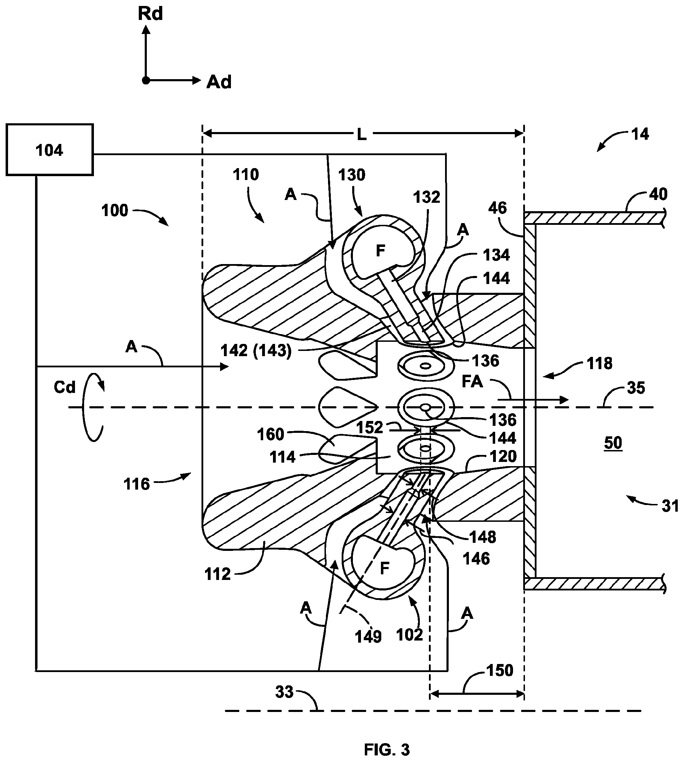

FIG. 3 depicts a cross-sectional view of a fuel injector assembly 100 suitable for use as the fuel injector assembly 48 of FIG. 2. The fuel injector assembly 100 can be fluidly coupled to the fuel source 34 and the air source 36 (FIG. 2). For example, the fuel injector assembly 100 can include a fuel supply 102 fluidly coupled with the fuel source 34, and can include an air supply 104 fluidly coupled with the air source 36. The fuel injector assembly 100 is coupled to the wall 46, the combustor liner 40, or a combination thereof, and is fluidly coupled with the combustion chamber 50. An aft end of the fuel injector assembly 100 can be coupled directly to the combustor liner 40 or indirectly (e.g., via the wall 46) to the combustor liner 40.

The fuel injector assembly 100 includes a mixing tube 110 having a mixing tube body 112 defining a mixing channel 114. A forward end of the mixing tube body 112 defines an inlet 116 of the mixing channel 114. The inlet 116 can be a portion of the air supply 104 and can be fluidly coupled to the air source 36 (FIG. 2) to provide air (A) to the mixing channel 114. An aft end of the mixing tube body 112 defines an outlet 118 of the mixing channel 114 fluidly coupled to the combustion chamber 50 to emit fluid, such as the fuel-air mixture (FA), from the fuel injector assembly 100 into the combustion chamber 50. The outlet 118 and the inlet 116 are in a serial arrangement along the mixing tube 110 such that at least some air (A) received in the inlet 116 can flow through the mixing tube 110 (e.g., along a centerline 35) toward the outlet 118 and into the combustion chamber 50. One or more of the mixing tube body 112, the inlet 116, or the outlet 118 can have a circular cross-sectional shape. An inner surface 120 of the mixing tube body 112 extends from the inlet 116 to the outlet 118 and at least partially defines the mixing channel 114.

The mixing tube 110 can include centerline 35 that is parallel with and radially offset from the centerline 33. The centerline 35 of the mixing tube 110 can define a radial direction (Rd), an axial direction (Ad), and a circumferential direction (Cd). The centerline 35 can be colinear with a centerline of the combustor portion 31 to which the fuel injector assembly 100 is connected.

The fuel supply 102 can include a fuel manifold 130 fluidly coupled to the fuel source 34 (FIG. 2) and a set of fuel passages 132 fluidly coupling the fuel manifold 130 to the mixing channel 114 to provide fuel (F) to the mixing channel 114. In some examples, the fuel manifold 130 can be at least partially defined in the mixing tube body 112 and arranged concentrically about the mixing channel 114. For example, the fuel manifold 130 can have an annular configuration about the mixing channel 114.

The set of fuel passages 132 can be at least partially defined in the mixing tube body 112 and can extend from the fuel manifold 130 to the mixing channel 114 to emit fuel (F) from the fuel manifold 130 into the mixing channel 114. For example, the set of fuel passages 132 can extend radially inward toward the centerline 35, at least to some degree. In a non-limiting example, the set of fuel passages 132 includes a plurality of fuel passages 132 that are circumferentially spaced from each other in an annular configuration relative to the centerline 35. The set of fuel passages 132 can include a set of fuel tips 134 fluidly coupling the set of fuel passages 132 to the mixing channel 114. The set of fuel tips 134 can extend into a set of fuel orifices 136 defined in the inner surface 120 of the mixing tube body 112 to emit fuel (F) into the mixing channel 114. The set of fuel orifices 136 can be circumferentially arranged along the inner surface 120 of the mixing tube body 112.

The set of fuel passages 132 can include fuel passage inner dimensions 146 (e.g., hydraulic diameters) and the set of fuel tips 134 can include fuel tip inner dimensions 148 (e.g., hydraulic diameters). A fuel passage centerline 149 can be defined in each passage in the set of fuel passages 132. In some examples, the fuel passage inner dimensions 146 and the fuel tip inner dimensions 148 can be measured perpendicular to the fuel passage centerline 149.

As illustrated, fuel tips in the set of fuel tips 134 taper from corresponding fuel passages in the set of fuel passages 132 such that the fuel tip inner dimensions 148, or at least a minimum thereof, is smaller than a corresponding fuel passage inner dimensions 146. Such a configuration can ease manufacturing by having tighter manufacturing tolerances on the sets of fuel tips 134 to allow for relatively looser tolerances of the set of fuel passages 132. For example, the sets of fuel tips 134 can more tightly control fuel (F) flow from the corresponding set of fuel orifices 136 into the mixing channel 114 and lessen variations in fuel (F) flow from the set of fuel orifices 136 into mixing channel 114, which can improve overall mixing capabilities of the fuel injector assembly 100.

While the set of fuel passages 132 are illustrated as including the set of fuel tips 134, at least some fuel passages in the set of fuel passages 132 can directly extend into corresponding fuel orifices in the set of fuel orifices 136. The set of fuel passages 132 can have fuel passage inner dimensions 146 that increase, decrease, or remain the same between the fuel manifold 130 and the set of fuel orifices 136.

The air supply 104 fluidly coupling the air source 36 (FIG. 2) to the fuel injector assembly 100 can include a set of air flow passages 142 at least partially defined in the mixing tube body 112. The set of air flow passages 142 can include a set of air outlets 144 defined along the inner surface 120 of the mixing tube body 112 to provide air (A) from the air source 36 (FIG. 2) to the mixing channel 114. The set of air flow passages 142 can extend at least partially through the mixing tube body 112. The air outlets 144 can be circumferentially spaced along the inner surface 120 in an annular configuration relative to the centerline 35 to provide air (A) to the mixing channel 114. At least some of the air outlets 144 circumscribe a corresponding fuel orifice in the set of fuel orifices 136 such that the air outlets 144 emit air (A) at least partially around fuel (F) emitted from the corresponding fuel orifice. In some examples, the corresponding fuel orifice in the set of fuel orifices 136 can be centered within the air outlet in the set of air outlets 144. The fuel injector assembly 100 can include a corresponding air outlet in the set of air outlets 144 for each fuel orifice in the set of fuel orifices 136. In some examples, at least some of the air flow passages in the set of air flow passages 142 can include a portion 143 circumscribing a corresponding fuel passage in the set of fuel passages 132 along an extension direction of the fuel passage (e.g. axially aft and radially inward toward the centerline 35) through the mixing tube body 112. A ratio of a mass flow of air (A) provided to the mixing channel 114 from the set of air outlets 144 to a mass flow of fuel (F) provided to the mixing channel 114 from the set of fuel orifices 136 can, for example, be greater than or equal to 0 and less than or equal to 100.

During operation of the fuel injector assembly 100, the fuel manifold 130 provides fuel (F) to the set of fuel passages 132, and fuel (F) flows through the set of fuel passages 132 and through the set of fuel orifices 136 such that the set of fuel orifices 136 emit fuel (F) into the mixing channel 114, where fuel (F) can mix, at least to some degree, with air (A) received from the inlet 116 of the mixing channel 114 flowing through the mixing tube 110 (e.g., along the centerline 35) toward the outlet 118. Also, the set of air outlets 144 emit air (A) at least partially around corresponding fuel orifices in the set of fuel orifices 136 such that air (A) from the set of air outlets 144 promote movement of fuel (F) from the set of fuel orifices 136 toward a center portion of the mixing channel 114 (e.g., toward the centerline 35). Such a configuration can increase the penetration of fuel (F) into air (A) flowing in the mixing channel 114 from the inlet 116, which can facilitate mixing of fuel (F) and air (A) to form a more uniform fuel-air mixture (FA). A more uniform fuel-air mixture (FA) can provide greater flame stability and lower flame temperatures, such as by limiting richer pockets of fuel (F). Further, such a configuration can promote movement of fuel (F) away from the inner surface 120 and thus reduce or prevent fuel (F) from lingering or remaining along the inner surface 120 of the mixing tube body 112, which might otherwise contribute to one or both of flashback and flame holding inside the mixing tube body 112.

The fuel-air mixture (FA) can have, for example, a fuel to air mass ratio of greater than or equal to 0.005 and less than or equal to 0.060. By way of further non-limiting example, at least for some fuels, the desired fuel-air mixture can have a fuel to air mass ratio of greater than or equal to 0.005 and less than or equal 0.030.

A mixing length 150 of the mixing channel 114 can be defined for a portion of the mixing tube 110 in which air (A) and fuel (F) are mixed. The mixing length 150 can be measured from the set of fuel orifices 136 to the outlet 118 in the axial direction (Ad). The set of fuel orifices 136 can include fuel orifice inner dimensions 152 (e.g., hydraulic diameters). In some examples, the fuel orifice inner dimensions 152 can be measured in the axial direction (Ad) between upstream and downstream edges of the fuel orifice 136. It is contemplated that fuel orifice inner dimensions 152 can be an average of inner dimensions measured between upstream and downstream edges of the fuel orifices 136. A ratio of the mixing length 150 to the fuel orifice inner dimensions 152 can be in a range from 0 (e.g., at the outlet 118) to 200, inclusive of endpoints.

The fuel injector assembly 100 (e.g., the mixing tube body 112) can include one or more turbulators 160 that can be disposed at least partially upstream of the set of fuel orifices 136. The fuel injector assembly 100 can, for example, include a corresponding turbulator in the turbulators 160 for each fuel orifice in the set of fuel orifices 136. The turbulators 160 can include protrusions extending from the inner surface 120 into the mixing channel 114 to turbulate air (A) in the mixing channel 114. The turbulence can facilitate the mixing of air (A) entering the mixing channel 114 via the inlet 116 with air (A) and fuel (F) entering the mixing channel 114 via the set of air outlets 144 and the set of fuel orifices 136, respectively. The turbulators 160 can, for example, be immediately upstream of the set of fuel orifices 136. In some examples, one or more of the turbulators 160 are configured as vortex generators. Vortex generators can include one or more of a variety of configurations, such as counter-rotating, delta wing, double-sided wedge, wheeler, wing, winglet, Kuethe, wishbone, hairpin, lobed, wave-type, or any combination thereof.

While the fuel injector assembly 100 is illustrated without a center body spike, the fuel injector assembly 100 can optionally include a center body at least partially circumscribed by the mixing tube body 112, extending along the centerline 35 in the axial direction (Ad), and disposed at least partially in the mixing channel 114. The center body spike can include one or more passages for fuel (F), air (A), or a combination thereof.

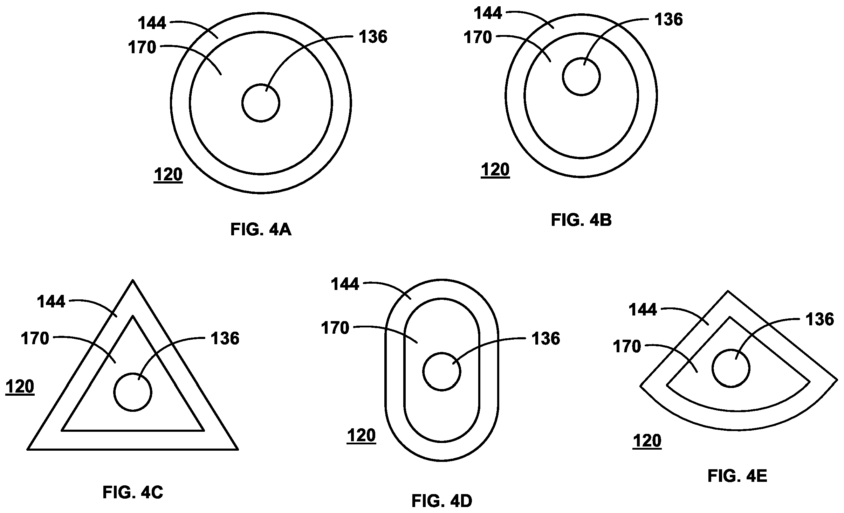

FIGS. 4A-4E are schematic views of example configurations of fuel orifices in the set of fuel orifices 136 and air outlets in the set of air outlets 144 when viewed along a plane perpendicular to the centerline 35 of the mixing tube 110 (FIG. 3). An intermediate portion 170 of the inner surface 120 is defined between the fuel orifice 136 and the air outlet 144. The set of fuel orifices 136 and the set of air outlets 144 can be concentric (FIG. 4A), or can be offset (FIG. 4B). While illustrated as circular in FIGS. 3, 4A, and 4B, the set of air outlets 144 can include other suitable cross-sectional shapes, such as a triangular shape (FIG. 4C), an elliptical shape (FIG. 4D), a sector shape (FIG. 4E), other shapes, or combinations thereof. Some shapes of air outlets in the set of air outlets 144 can improve the amount of shielding or prevention of movement to a portion of fuel (F) exiting a corresponding fuel orifice in the set of fuel orifices 136. Increased shielding can increase fuel penetration, which can increase fuel-air mixing. Some shapes can, to varying degrees, turbulate emitted air (A) and, in turn, facilitate the mixing of air (A) and fuel (F) entering the mixing channel 114, which can reduce richer pockets of fuel (F) at one or both of the mixing channel 114 and the inner surface 120 of the mixing tube body 112, which can, in turn, provide lower flame temperatures, and lower flashback or flame holding capability. Some shapes can be less complex to manufacture via drilling, such as circular shapes. Additionally or alternatively, some shapes can be less complex to manufacture via additive manufacturing, such as triangular shapes.

In some examples, air (A) provided to the fuel injector assembly 100 (FIG. 3), such as from the compressor section 12 (FIG. 1), can be at a relatively high temperature, such as at or above 1200 °F, and fuel (F) provided to the fuel injector assembly 100 can have a comparatively low temperature, such as 500 °F or less, or 100 °F or less. The presence of fuel (F) and air (A) at such differing temperatures in the fuel injector assembly 100, such as in the mixing tube body 112 (FIG. 3), can create thermal gradients between portions of the fuel injector assembly 100 in thermal contact with the relatively hotter air (A) and the relatively cooler fuel (F). These thermal gradients can cause portions of the fuel injector assembly 100 to experience increased thermal stress that can wear and degrade portions of the fuel injector assembly 100 (e.g., the inner surface 120 of the mixing tube body 112). Providing the air flow passages 142 (FIG. 3) in a circumscribing arrangement around the fuel passages 132 can lessen the thermal gradients in portions of the mixing tube body 112 adjacent to or in thermal contact with fuel (F), which can limit thermal stress and lessen wear and degradation of the fuel injector assembly 100.

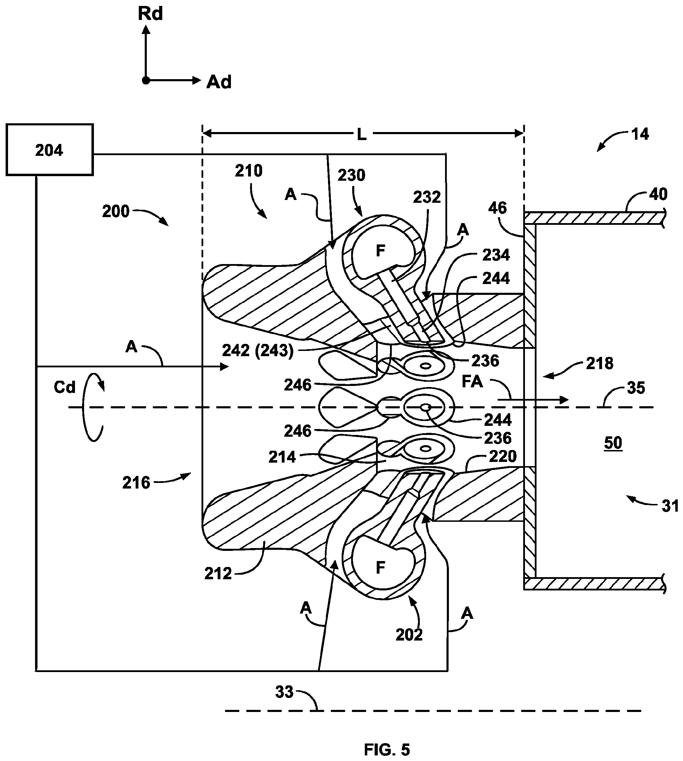

Referring to FIG. 5, a fuel injector assembly 200 is provided that is suitable for use as a fuel injector assembly 48 in FIG. 2. The fuel injector assembly 200 of FIG. 5 can be substantially similar to the fuel injector assembly 100 of FIG. 3; therefore, like parts will be identified with like numerals increased to the 200 series with it being understood that the description of the fuel injector assembly 100 (FIG. 3) can apply to the fuel injector assembly 200 unless noted otherwise.

For example, the fuel injector assembly 200 can include a mixing tube 210 having a mixing tube body 212 defining a mixing channel 214, an air supply 204 providing air (A) to the mixing channel 214, and a fuel supply 202 providing fuel (F) to the mixing channel 214. The air supply 204 can include an inlet 216 of the mixing channel 214 and a set of air flow passages 242. The set of air flow passages 242 can be at least partially defined in the mixing tube body 212. The fuel supply 202 can include a fuel manifold 230 and a set of fuel passages 232 terminating at a set of fuel tips 234 having a set of fuel orifices 236 defined in an inner surface 220 of the mixing tube body 212. An aft end of the mixing tube body 212 defines an outlet 218 of the mixing channel 214 fluidly coupled to the combustion chamber 50 to emit fluid, such as the fuel-air mixture (FA), from the fuel injector assembly 200 into the combustion chamber 50.

Some or each of the air flow passages in the set of air flow passages 242 can include a set of first air outlets 244 defined by the inner surface 220 of the mixing tube body 212 providing air (A) to the mixing channel 214. At least some of the first air outlets in the set of first air outlets 244 circumscribe a corresponding fuel orifice in the set of fuel orifices 236 such that the first air outlet 244 emits air (A) at least partially around fuel (F) emitted from the corresponding fuel orifice in the set of fuel orifices 236, such as in a similar manner to the set of air outlets 144 and the set of fuel orifices 136 of FIG. 3. The set of air flow passages 242 can include a set of second air outlets 246 along a portion of the inner surface 220 of the mixing tube body 212 providing air (A) to the mixing channel 214. In some examples, fuel injector assembly 200 can include at least some of the air flow passages 242 having a portion 243 circumscribing a corresponding fuel passage in the set of fuel passages 232 along an extension direction of the fuel passage through the mixing tube body 212.

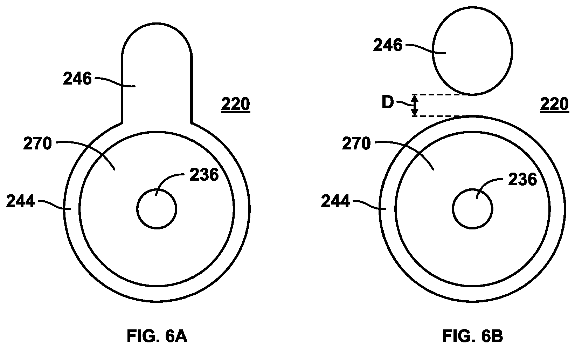

As illustrated in FIG. 6A, one or more of the first air outlets in the set of first air outlets 244 can circumscribe a corresponding fuel orifice in the set of fuel orifices 236 to define an intermediate portion 270 of the inner surface 220 between the fuel orifice 236 and the first air outlet 244, and one or more second air outlets in the set of second air outlets 246 can at least partially overlap with a corresponding first air outlet in the set of first air outlets 244 to have an overlapping configuration. An area overlap can be defined as a percentage of an area of the second air outlet 246 defined in the inner surface 220 that overlaps or overlays the first air outlet 244 relative to an area of the first air outlet 244 defined in the inner surface 220. For example, the area overlap can be in a range from 10% to 50%.

As illustrated in FIG. 6B, one or more of the first air outlets in the set of first air outlets 244 can circumscribe a corresponding fuel orifice in the set of fuel orifices 236 to define the intermediate portion 270 of the inner surface 220 between the fuel orifice 236 and the first air outlet 244, where one or more second air outlets in the set of second air outlets 246 can be distinct from and adjacent to a corresponding first air outlet in the set of first air outlets 244 to define an offset configuration (e.g., the area overlap is 0%). For example, the second air outlet 246 can be defined in the inner surface 220 and can be disposed a distance D from the corresponding first air outlet. The distance D can be measured along the inner surface 220 from the first air outlet 244 to the second air outlet 246. In some examples, the distance D can be within 10% of an inner dimension (e.g., hydraulic diameter) of the first air outlet 244 defined in the inner surface 220. The set of second air outlets 246 can be at least partially upstream of the corresponding first air outlet in the set of first air outlets 244. In some examples, some first air outlets in the set of first air outlets 244 and corresponding second air outlets in the set of second air outlets 246 in the offset configuration can each be fluidly coupled to a distinct air flow passage in the set of air flow passages 242.

In some examples, the set of second air outlets 246 can include a combination of one or more pairs of second air outlets and corresponding first air outlets in the overlapping configuration and one or more pairs of second air outlets and corresponding first air outlets in the offset configuration. Further, while the first air outlet 244 is illustrated as a circular in FIGS. 5, 6A, and 6B, the first air outlet 244 can include other shapes, such as the configurations illustrated for the set of air outlets 144 in FIGS. 4B-E, other shapes, or combinations thereof. With some aspects, the disclosed combustors and fuel injector assemblies can be utilized with gaseous fuel, such as hydrogen, utilized with traditional fuel, such as kerosine (e.g., Jet A), diesel, natural gas, methane, ammonia, combinations of traditional fuels, or combinations of hydrogen and one or more traditional fuels. Gaseous fuel, including hydrogen, spreads or disperses at a faster rate than atomized traditional fuel, which can involve less mixing time for the gaseous fuel, fuel mixing tube lengths can be shorter, and the flame from the gaseous fuel can be more likely to spread farther and faster, which can increase the risk of blowout and increase the impact of controlling the flame and limiting flame spread by controlling the dispersion of the gaseous fuel.

Many other possible aspects and configurations in addition to those shown in the above figures are contemplated by the present disclosure. For example, the disclosed fuel injector assemblies can provide greater flame stability, lower flame temperatures, and lower NOₓ emissions relative to other designs.

Fuel injector assemblies disclosed herein can include at least some air outlets that circumscribe corresponding fuel orifices and emit air (A) at least partially around emitted fuel (F) from the corresponding fuel orifices, which can limit thermal stresses and lessen wear and degradation of portions of the fuel injector assembly in thermal contact with both air and fuel as a result of these thermal stresses. Additionally or alternatively, such a circumscribing configuration of the air outlets about the fuel orifices can increase the penetration of fuel into air to facilitate mixing and create more uniform fuel-air mixtures for lower NOₓ emissions. Turbulators that extend into the mixing channel of the fuel injector assembly can create turbulence for improving mixing of fuel and air.

While described with respect to a turbine engine, it should be appreciated that the combustor as described herein can be for any engine having a combustor. It should be appreciated that application of aspects of the disclosure discussed herein are applicable to engines with propeller sections or fan and booster sections along with turbojets and turbo engines as well.

To the extent not already described, the different features and structures of the various embodiments can be used in combination, or in substitution with each other as desired. That one feature is not illustrated in all the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure. For example, and without limitation, combustors can include various combinations of fuel injector assemblies. In some examples, the same combustor can include fuel injector assemblies with any combination of the configurations illustrated in FIGS. 3, 4A-E, 5, 6A-6B.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:

A gas turbine engine comprising: a compressor section, a combustion section, and a turbine section in serial flow arrangement, with the combustion section comprising: a combustor liner at least partially defining a combustion chamber; and a fuel injector assembly comprising: a mixing tube having a mixing tube body with an inner surface at least partially defining a mixing channel, the mixing channel having an outlet fluidly coupled to the combustion chamber; a set of fuel passages having a set of fuel orifices circumferentially arranged along the inner surface; and a set of air flow passages having a set of air outlets arranged on the inner surface, with at least one air outlet in the set of air outlets circumscribing a corresponding fuel orifice in the set of fuel orifices.

The gas turbine engine of any preceding clause, wherein the at least one air outlet is annular.

The gas turbine engine of any preceding clause, wherein the corresponding fuel orifice is centered within the at least one air outlet.

The gas turbine engine of any preceding clause, wherein the set of air outlets includes an air outlet for each fuel orifice.

The gas turbine engine of any preceding clause, wherein at least one air flow passage in the set of air flow passages includes a portion circumscribing a corresponding fuel passage in the set of fuel passages along an extension direction of the fuel passage through the mixing tube body.

The gas turbine engine of any preceding clause, wherein the fuel injector assembly includes a fuel manifold at least partially defined by the mixing tube body; and wherein the set of fuel passages extend from the fuel manifold to the mixing channel.

The gas turbine engine of any preceding clause, wherein the fuel manifold has an annular configuration about the mixing channel.

The gas turbine engine of any preceding clause, wherein the set of fuel passages further comprises a set of fuel tips; and wherein the set of fuel tips extend to the set of fuel orifices.

The gas turbine engine of any preceding clause, further comprising one or more turbulators having protrusions extending into the mixing channel.

The gas turbine engine of any preceding clause, wherein the one or more turbulators is upstream of the set of fuel orifices.

The gas turbine engine of any preceding clause, wherein there is a corresponding turbulator for each fuel orifice.

The gas turbine engine of any preceding clause, wherein a cross-sectional shape of at least one air outlet in the set of air outlets can include a circular shape, a triangular shape, an elliptical shape, or a sector shape.

The gas turbine engine of any preceding clause, wherein a ratio of a mass flow of air provided to the mixing channel from the set of air outlets to a mass flow of fuel provided to the mixing channel from the set of fuel orifices is greater than or equal to 0 and less than or equal to 100.

The gas turbine engine of any preceding clause, wherein a flow of fuel-air mixture provided to the combustion chamber from the outlet has a fuel to air mass ratio of greater than or equal to 0.005 and less than or equal to 0.060.

The gas turbine engine of any preceding clause, wherein the mixing channel has a mixing length measured from the set of fuel orifices to the outlet, the set of fuel orifices has fuel orifice inner dimensions measured between upstream and downstream edges of each fuel orifice in the set of fuel orifices, and a ratio of the mixing length to the fuel orifice inner dimensions is in a range from 0 to 200, inclusive of endpoints.

The gas turbine engine of any preceding clause, wherein the set of air outlets is a set of first air outlets, and the fuel injector assembly includes a set of second air outlets at least partially upstream of the set of first air outlets.

The gas turbine engine of any preceding clause, wherein at least one second air outlet in the set of second air outlets is in an offset configuration with a corresponding first air outlet in the set of first air outlets.

The gas turbine engine of any preceding clause, wherein at least one second air outlet in the set of second air outlets is in an overlapping configuration with a corresponding first air outlet in the set of first air outlets.

The gas turbine engine of any preceding clause, wherein the set of second air outlets includes at least one second air outlet in an offset configuration and at least one second air outlet in an overlapping configuration with corresponding first air outlets in the set of first air outlets.

A fuel injector assembly for a gas turbine engine comprising: a mixing tube having a mixing tube body with an inner surface at least partially defining a mixing channel, the mixing channel having an outlet fluidly coupled to a combustion chamber; a set of fuel passages having a set of fuel orifices circumferentially arranged along the inner surface; and a set of air flow passages having a set of air outlets arranged on the inner surface, with at least one air outlet in the set of air outlets circumscribing a corresponding fuel orifice in the set of fuel orifices.

The fuel injector assembly of any preceding clause, wherein the at least one air outlet is annular.

The fuel injector assembly of any preceding clause, wherein the corresponding fuel orifice is centered within the at least one air outlet.

The fuel injector assembly of any preceding clause, wherein at least one air flow passage in the set of air flow passages has a portion circumscribing a corresponding fuel passage in the set of fuel passages along an extension direction of the fuel passage through the mixing tube body.

The fuel injector assembly of any preceding clause, wherein a cross-sectional shape of at least one air outlet in the set of air outlets can include a circular shape, a triangular shape, an elliptical shape, or a sector shape.

The fuel injector assembly of any preceding clause, wherein a ratio of a mass flow of air provided to the mixing channel from the set of air outlets to a mass flow of fuel provided to the mixing channel from the set of fuel orifices is greater than or equal to 0 and less than or equal to 100.

The fuel injector assembly of any preceding clause, wherein a flow of fuel-air mixture provided to the combustion chamber from the outlet has a fuel to air mass ratio of greater than or equal to 0.005 and less than or equal to 0.060.

The fuel injector assembly of any preceding clause, wherein the mixing channel has a mixing length measured from the set of fuel orifices to the outlet, the set of fuel orifices has fuel orifice inner dimensions measured between upstream and downstream edges of each fuel orifice in the set of fuel orifices, and a ratio of the mixing length to the fuel orifice inner dimensions is in a range from 0 to 200, inclusive of endpoints.

The fuel injector assembly of any preceding clause, wherein the set of air outlets is a set of first air outlets, and the fuel injector assembly includes a set of second air outlets at least partially upstream the set of first air outlets, the set of second air outlets comprising at least one of: a second air outlet in an offset configuration with a corresponding first air outlet in the set of first air outlets, or a second air outlet in an overlapping configuration with a corresponding first air outlet in the set of first air outlets.

The fuel injector assembly of any preceding clause, wherein the set of air outlets includes an air outlet for each fuel orifice.

The fuel injector assembly of any preceding clause, wherein the fuel injector assembly includes a fuel manifold at least partially defined by the mixing tube body; and wherein the set of fuel passages extend from the fuel manifold to the mixing channel.

The fuel injector assembly of any preceding clause, wherein the fuel manifold has an annular configuration about the mixing channel.

The fuel injector assembly of any preceding clause, wherein the set of fuel passages further comprises a set of fuel tips; and wherein the set of fuel tips extend to the set of fuel orifices.

The fuel injector assembly of any preceding clause, further comprising one or more turbulators having protrusions extending into the mixing channel.

The fuel injector assembly of any preceding clause, wherein the one or more turbulators is upstream of the set of fuel orifices.

The fuel injector assembly of any preceding clause, wherein there is a corresponding turbulator for each fuel orifice.

The fuel injector assembly of any preceding clause, wherein the set of air outlets is a set of first air outlets, and the fuel injector assembly includes a set of second air outlets at least partially upstream of the set of first air outlets.

The fuel injector assembly of any preceding clause, wherein at least one second air outlet in the set of second air outlets is in an offset configuration with a corresponding first air outlet in the set of first air outlets.

The fuel injector assembly of any preceding clause, wherein at least one second air outlet in the set of second air outlets is in an overlapping configuration with a corresponding first air outlet in the set of first air outlets.

The fuel injector assembly of any preceding clause, wherein the set of second air outlets includes at least one second air outlet in an offset configuration and at least one second air outlet in an overlapping configuration with corresponding first air outlets in the set of first air outlets.

## Claims

1. A gas turbine engine (10) comprising:
a compressor section (12), a combustion section (14), and a turbine section (16) in serial flow arrangement, the combustion section (14) comprising:
a combustor liner (40) at least partially defining a combustion chamber (50); and
a fuel injector assembly (48, 100, 200) comprising:
a mixing tube (38, 110, 210) having a mixing tube body (112, 212) with an inner surface (120, 220) at least partially defining a mixing channel (114, 214), the mixing channel (114, 214) having an outlet (118, 218) fluidly coupled to the combustion chamber (50);
a set of fuel passages (132, 232) having a set of fuel orifices (136, 236) circumferentially arranged along the inner surface (120, 220); and
a set of air flow passages (142, 242) having a set of air outlets (144, 244) arranged on the inner surface (120, 220), with at least one air outlet (144, 244) in the set of air outlets (144, 244) circumscribing a corresponding fuel orifice (136, 236) in the set of fuel orifices (136, 236).

2. The gas turbine engine (10) of claim 1, wherein the at least one air outlet (144, 244) is annular.

3. The gas turbine engine (10) of claim 2, wherein the corresponding fuel orifice (136, 236) is centered within the at least one air outlet (144, 244).

4. The gas turbine engine (10) of claim 3, wherein the set of air outlets (144, 244) includes an air outlet (144, 244) for each fuel orifice (136, 236).

5. The gas turbine engine (10) of claim 1, wherein at least one air flow passage (142, 242) in the set of air flow passages (142, 242) includes a portion (143, 243) circumscribing a corresponding fuel passage (132, 232) in the set of fuel passages (132, 232) along an extension direction of the fuel passage through the mixing tube body (112, 212).

6. The gas turbine engine (10) of claim 1, wherein the fuel injector assembly (48, 100, 200) includes a fuel manifold (130, 230) at least partially defined by the mixing tube body (112, 212); and
wherein the set of fuel passages (132, 232) extend from the fuel manifold (130, 230) to the mixing channel (114, 214).

7. The gas turbine engine (10) of claim 6, wherein the fuel manifold (130, 230) has an annular configuration about the mixing channel (114, 214).

8. The gas turbine engine (10) of claim 1, wherein the set of fuel passages (132, 232) further comprises a set of fuel tips (134, 234); and
wherein the set of fuel tips (134, 234) extend to the set of fuel orifices (136, 236).

9. The gas turbine engine (10) of claim 1, further comprising one or more turbulators (160) having protrusions extending into the mixing channel (114, 214).

10. The gas turbine engine (10) of claim 9, wherein the one or more turbulators (160) is upstream of the set of fuel orifices (136, 236).

11. The gas turbine engine (10) of claim 9, wherein there is a corresponding turbulator (160) for each fuel orifice (136, 236).

12. The gas turbine engine (10) of claim 1, wherein the set of air outlets (144, 244) is a set of first air outlets (244), and the fuel injector assembly (48, 100, 200) includes a set of second air outlets (246) at least partially upstream of the set of first air outlets (244).

13. The gas turbine engine (10) of claim 12, wherein at least one second air outlet (246) in the set of second air outlets (246) is in an offset configuration with a corresponding first air outlet (244) in the set of first air outlets (244).

14. The gas turbine engine (10) of claim 12, wherein at least one second air outlet (246) in the set of second air outlets (246) is in an overlapping configuration with a corresponding first air outlet (244) in the set of first air outlets (244).

15. The gas turbine engine (10) of claim 12, wherein the set of second air outlets (246) includes at least one second air outlet (246) in an offset configuration and at least one second air outlet (246) in an overlapping configuration with corresponding first air outlets (244) in the set of first air outlets (244).
